# EUROPEAN PATENT APPLICATION

(11) **EP 4 647 896 A1**
(43) Date of publication of application: **12.11.2025**
(21) Application number: 25172539.6
(22) Date of filing: 25.04.2025
(51) Int. Cl.: G06F 8/30, G06F 8/36, G06N 20/00

(54) **AI-BASED CODE GENERATION USING A DYNAMICALLY CONSTRUCTED SYMBOL GRAPH AND CODE SKELETONS**

(30) Priority: 07.05.2024 US 202418657655
(71) Applicant: Microsoft Technology Licensing, LLC, Redmond, WA 98052 (US)
(72) Inventor: KHAN, MD Mohaimen Hasan, Redmond, 98052 (US); ABDULKADIR, Ahmed Omar, Redmond, 98052 (US); MULLEN, Nicholas Taylor, Redmond, 98052 (US); ROBERTS, Briana Ashley, Redmond, 98052 (US); GUNDERMAN, Christian David, Redmond, 98052 (US); HONG, Hannah Jihye, Redmond, 98052 (US); CALDWELL, Noelle Leeling, Redmond, 98052 (US); YIGITBAS, Denizhan, Redmond, 98052 (US)
(74) Representative: CMS Cameron McKenna Nabarro Olswang LLP

(57) **Abstract**

Techniques are described herein that are capable of performing AI-based code generation using a dynamically constructed symbol graph and code skeletons. A query, which requests code, is received. A symbol graph, which maps relationships between subsets of a symbol corpus, is dynamically constructed. Symbols are selected from the symbol corpus based on relevancy to the user-generated query. Code skeletons associated with the symbols are retrieved. An AI model is caused to generate at least a portion of the code from at least a subset of the symbols by providing an AI prompt, which requests the code, together with the code skeletons as inputs to the AI model. A response to the AI prompt, including at least the portion of the code, is received from the AI model. Presentation of a response to the query is triggered. The response to the query includes at least the portion of the code.

## Description

### BACKGROUND

Code developers are increasingly using artificial intelligence (AI) platforms to find solutions to coding problems. For example, a developer may ask an AI platform to generate code that performs a desired function so that the developer may incorporate the code into a computer program that is being written by the developer. However, such AI platforms typically rely on large language models (LLMs), which may generate hallucinations, especially when the LLMs utilize a complex or unique codebase to generate the code. A hallucination is a response that is generated by an AI platform in response to a request and that is incorrect, nonsensical, or irrelevant with regard to the request or references (e.g., utilizes) component(s) (e.g., a function or a class) that do not exist. For example, code that is generated by an AI platform may not perform a function that is requested by a developer, may produce an undesirable (e.g., inaccurate) result, or may not be operable at all. Any of a variety of factors may cause an AI platform to generate a hallucination when asked to generate code. For example, the AI platform may have a limited understanding of relationships and functionalities that are specific to user-defined symbols in a codebase that is used by the AI platform to generate the code. The limited understanding may reduce accuracy, precision, reliability, efficiency, and utility of the AI platform (and an LLM on which the AI platform relies) with regard to generating the code.

### SUMMARY

It may be desirable to reduce a likelihood of an artificial intelligence (AI) model to produce a hallucination in response to a request to generate code by increasing an understanding of semantics and structure of a codebase that is used by the AI model to generate the code. The understanding of the semantics and structure of the codebase may be increased by providing grounding context in the form of code skeletons and/or relevant code samples. The code skeletons and/or the relevant code samples may be determined by using semantic information about code in the codebase from rules of a programming language in which code is written. For example, names in particular contexts may represent "references." This semantic information may be used to locate symbols that the names reference and retrieve code skeletons associated with the symbols so that the AI model may use the code skeletons to generate code that performs requested functionality (e.g., with a lower likelihood of producing a hallucination or relying on an invalid assumption). By providing the code skeletons as inputs to the AI model, the AI model may be able to generate the code that performs the requested functionality more accurately, precisely, reliably, and/or efficiently than conventional techniques for using AI to generate code. Thus, providing the code skeletons to the AI model may increase utility of the AI model with regard to generating the code.

An AI model is a model that utilizes artificial intelligence to generate an answer that is responsive to an AI prompt that is received by the AI model. The AI model may be an artificial general intelligence model. An artificial general intelligence model is an AI model (e.g., an autonomous AI model) that is configured to be capable of performing any task that an animal (e.g., a human) is capable of performing.

Artificial intelligence is intelligence of a machine (e.g., a computing system) and/or code (e.g., software and/or firmware), as opposed to intelligence of an animal (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

A codebase is source code that is used to build a particular computer program or a portion thereof. For instance, the codebase may define the particular computer program or the portion thereof. The computer program may be a software program or a firmware program. Accordingly, the codebase may include a plurality of code snippets (a.k.a. code chunks). A code snippet is a portion of the source code in the codebase. Each code snippet includes one or more symbols. A symbol is a data type, and instance(s) of the symbol have a human-readable form. Examples of a symbol include but are not limited to an object, a function, a class, a type, a property, a list, a field, a method, a constructor, an array, an identifier (e.g., class name, property name), a tag, and a stroke. A symbol may be defined by a user, an organization associated with the user, or a library.

A symbol graph maps relationships between subsets of symbols in a codebase. Each relationship indicates an interaction between first symbol(s) in a first subset and second symbol(s) in a second subset. In an example, the first subset includes a caller symbol (a.k.a. a "parent symbol") that calls a dependent symbol that is included in the second subset. In accordance with this example, the caller symbol has a dependency on the dependent symbol. Accordingly, the caller symbol relies on the dependent symbol. The relationships in the symbol graph may be explicit (e.g., precise) relationships or implicit relationships. An explicit relationship is a relationship that is defined by a language rule. For instance, any suitable standard, such as a language server index format (LSIF) standard, may be used to implement such language rules. An implicit relationship is a relationship between symbols that is inferred based on (e.g., based at least on) information regarding the symbols. For instance, the locations of the symbols may be recorded, and a relationship may be inferred based on the same symbol name corresponding to a location that may be a reference. A symbol graph may be implemented using a language service or a compiler.

A code skeleton defines a structure of a symbol (e.g., in a codebase) and includes placeholder code in lieu of content of the symbol. For instance, the structure of the symbol may indicate a purpose of the symbol, a type of the symbol, member(s) of the symbol, properties of the symbol, and/or relationship(s) between the symbol and other symbol(s). The content of the symbol implements functionality of the symbol. The code skeleton may describe the functionality of the symbol or indicate how to use the functionality of the symbol. The code skeleton may include source code, a condensed representation of the source code, or other information (e.g., a condensed representation of documentation or a hint) regarding the symbol. The code skeleton may resemble pseudocode but allow parsing, compilation, and testing of the code skeleton. For instance, the placeholder code in the code skeleton may simulate processing and avoid an error during compilation of the code skeleton.

Various approaches are described herein for, among other things, performing AI-based code generation using a dynamically constructed symbol graph and code skeletons. In an example approach, a user-generated query is received. The user-generated query requests code that performs a specified function. Based at least on (e.g., in response to or as a result of) receipt of the user-generated query, a symbol graph, which maps relationships between subsets of a plurality of symbols in a codebase, is dynamically constructed. Symbols are selected from the plurality of symbols based at least on the symbols that are selected having relevancies to the user-generated query that satisfy a relevancy criterion by dynamically traversing the symbol graph. Based at least on the symbols being selected from the plurality of symbols, code skeletons associated with the symbols are retrieved. Each code skeleton defines a structure of a symbol in the codebase and includes placeholder code in lieu of content of the symbol. An AI model is caused to generate at least a portion of the code that performs the specified function from at least a subset of the symbols in the codebase by providing an AI prompt together with the code skeletons as inputs to the AI model. The AI prompt requests that the AI model provide the code that performs the specified function. The code skeletons include context regarding the AI prompt. A response to the AI prompt is received from the AI model. The response to the AI prompt includes at least the portion of the code that is generated by the AI model. As a result of receiving the response to the AI prompt from the AI model, presentation of a response to the user-generated query is triggered. The response to the user-generated query includes at least the portion of the code that is generated by the AI model.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example symbol graph-based code generation system in accordance with an embodiment.
FIGS. 2 and 4 depict flowcharts of example methods for performing AI-based code generation using a dynamically constructed symbol graph and code skeletons in accordance with embodiments.
FIG. 3 depicts a flowchart of an example method for selecting symbols from a plurality of symbols in accordance with an embodiment.
FIG. 5 is a block diagram of an example computing system in accordance with an embodiment.
FIG. 6 is a system diagram of an example mobile device in accordance with an embodiment.
FIG. 7 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

It may be desirable to reduce a likelihood of an artificial intelligence (AI) model to produce a hallucination in response to a request to generate code by increasing an understanding of semantics and structure of a codebase that is used by the AI model to generate the code. The understanding of the semantics and structure of the codebase may be increased by providing grounding context in the form of code skeletons and/or relevant code samples. The code skeletons and/or the relevant code samples may be determined by using semantic information about code in the codebase from rules of a programming language in which code is written. For example, names in particular contexts may represent "references." This semantic information may be used to locate symbols that the names reference and retrieve code skeletons associated with the symbols so that the AI model may use the code skeletons to generate code that performs requested functionality (e.g., with a lower likelihood of producing a hallucination or relying on an invalid assumption). By providing the code skeletons as inputs to the AI model, the AI model may be able to generate the code that performs the requested functionality more accurately, precisely, reliably, and/or efficiently than conventional techniques for using AI to generate code. Thus, providing the code skeletons to the AI model may increase utility of the AI model with regard to generating the code.

An AI model is a model that utilizes artificial intelligence to generate an answer that is responsive to an AI prompt that is received by the AI model. The AI model may be an artificial general intelligence model. An artificial general intelligence model is an AI model (e.g., an autonomous AI model) that is configured to be capable of performing any task that an animal (e.g., a human) is capable of performing.

Artificial intelligence is intelligence of a machine (e.g., a computing system) and/or code (e.g., software and/or firmware), as opposed to intelligence of an animal (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

A codebase is source code that is used to build a particular computer program or a portion thereof. For instance, the codebase may define the particular computer program or the portion thereof. The computer program may be a software program or a firmware program. Accordingly, the codebase may include a plurality of code snippets (a.k.a. code chunks). A code snippet is a portion of the source code in the codebase. Each code snippet includes one or more symbols. A symbol is a data type, and instance(s) of the symbol have a human-readable form. Examples of a symbol include but are not limited to an object, a function, a class, a type, a property, a list, a field, a method, a constructor, an array, an identifier (e.g., class name, property name), a tag, and a stroke. A symbol may be defined by a user, an organization associated with the user, or a library.

A symbol graph maps relationships between subsets of symbols in a codebase. Each relationship indicates an interaction between first symbol(s) in a first subset and second symbol(s) in a second subset. In an example, the first subset includes a caller symbol (a.k.a. a "parent symbol") that calls a dependent symbol that is included in the second subset. In accordance with this example, the caller symbol has a dependency on the dependent symbol. Accordingly, the caller symbol relies on the dependent symbol. The relationships in the symbol graph may be explicit (e.g., precise) relationships or implicit relationships. An explicit relationship is a relationship that is defined by a language rule. For instance, any suitable standard, such as a language server index format (LSIF) standard, may be used to implement such language rules. An implicit relationship is a relationship between symbols that is inferred based on (e.g., based at least on) information regarding the symbols. For instance, the locations of the symbols may be recorded, and a relationship may be inferred based on the same symbol name corresponding to a location that may be a reference. A symbol graph may be implemented using a language service or a compiler.

A code skeleton defines a structure of a symbol (e.g., in a codebase) and includes placeholder code in lieu of content of the symbol. For instance, the structure of the symbol may indicate a purpose of the symbol, a type of the symbol, member(s) of the symbol, properties of the symbol, and/or relationship(s) between the symbol and other symbol(s). The content of the symbol implements functionality of the symbol. The code skeleton may describe the functionality of the symbol or indicate how to use the functionality of the symbol. The code skeleton may include source code, a condensed representation of the source code, or other information (e.g., a condensed representation of documentation or a hint) regarding the symbol. The code skeleton may resemble pseudocode but allow parsing, compilation, and testing of the code skeleton. For instance, the placeholder code in the code skeleton may simulate processing and avoid an error during compilation of the code skeleton.

Example embodiments described herein are capable of performing AI-based code generation using a dynamically constructed symbol graph and code skeletons. In an example approach, a user-generated query is received. The user-generated query requests code that performs a specified function. Based at least on (e.g., in response to or as a result of) receipt of the user-generated query, a symbol graph, which maps relationships between subsets of a plurality of symbols in a codebase, is dynamically constructed. Symbols from the plurality of symbols are selected based at least on the symbols that are selected having relevancies to the user-generated query that satisfy a relevancy criterion by dynamically traversing the symbol graph. Based at least on the symbols being selected from the plurality of symbols, code skeletons associated with the symbols are retrieved. Each code skeleton defines a structure of a symbol in the codebase and includes placeholder code in lieu of content of the symbol. An AI model is caused to generate at least a portion of the code that performs the specified function from at least a subset of the symbols in the codebase by providing an AI prompt together with the code skeletons as inputs to the AI model. The AI prompt requests that the AI model provide the code that performs the specified function. The code skeletons include context regarding the AI prompt. A response to the AI prompt is received from the AI model. The response to the AI prompt includes at least the portion of the code that is generated by the AI model. As a result of receiving the response to the AI prompt from the AI model, presentation of a response to the user-generated query is triggered. The response to the user-generated query includes at least the portion of the code that is generated by the AI model.

Example techniques described herein have a variety of benefits as compared to conventional techniques for using AI to generate code. For instance, the example techniques are capable of reducing a likelihood of an AI model to generate a hallucination when asked to generate code. For example, the likelihood of the hallucination may be reduced by increasing the AI model's understanding of relationships and functionalities that are specific to user-defined symbols in a codebase that is used by the AI model to generate the code. In an aspect, the understanding of the relationships and functionalities is increased by dynamically constructing a symbol graph that maps relationships between subsets of a plurality of symbols in a codebase (e.g., by using an index associated with the symbols), selecting symbols from the plurality of symbols based at least on the symbols that are selected having relevancies to the user-generated query that satisfy a relevancy criterion by dynamically traversing the symbol graph, retrieving code skeletons associated with the symbols, and providing the code skeletons as inputs to the AI model for generation of the code. Increasing the AI model's understanding of such relationships and functionalities may increase accuracy, precision, reliability, efficiency, and/or utility of the AI model with regard to generating the code. The example techniques may enable the AI model to understand syntax, semantics, and structure of the codebase and to tailor the code that is generated by the AI model to conform to a particular architecture and/or logical pattern(s) of a project or active code. The dynamic nature of the symbol graph and indexing of the symbols may ensure that the example techniques remain effective even as the codebase evolves and as new programming paradigms are adopted, enabling the example techniques to provide a robust solution for projects of any size and complexity. The example techniques may provide a richer, more accurate context for code suggestions, which may make AI-assisted coding more intuitive, efficient, and reliable.

By dynamically constructing a symbol graph that maps relationships between subsets of a plurality of symbols in a codebase, selecting symbols from the plurality of symbols based at least on the symbols that are selected having relevancies to the user-generated query that satisfy a relevancy criterion by dynamically traversing the symbol graph, retrieving code skeletons associated with the symbols, and providing the code skeletons as inputs to an AI model for generation of the code, the example techniques may increase a user experience of a developer who requests the generation of the code. For instance, the user experience of the developer may be increased through the increased accuracy, precision, reliability, efficiency, and/or utility of the AI model and the code generated by the AI model. The example techniques may increase an efficiency of the developer by reducing the amount of time that the developer otherwise may have consumed to determine whether the code is a hallucination, to manually revise the code to perform the desired function, or to manually write the code from scratch.

The example techniques may reduce an amount of time and/or resources (e.g., processor cycles, memory, network bandwidth) that is consumed by a computing system to generate code that performs a specified function. For instance, by dynamically constructing a symbol graph that maps relationships between subsets of a plurality of symbols in a codebase, selecting symbols from the plurality of symbols based at least on the symbols that are selected having relevancies to the user-generated query that satisfy a relevancy criterion by dynamically traversing the symbol graph, retrieving code skeletons associated with the symbols, and providing the code skeletons as inputs to an AI model for generation of the code, the amount of time and resources that otherwise would have been consumed to generate the code may be reduced. By automatically performing the aforementioned tasks, the amount of time and resources that otherwise would be consumed to perform such tasks manually (e.g., based on instructions received from a user) may be avoided. Automating any of the aforementioned tasks may reduce a cost associated with generating the code. By reducing the amount of time and/or resources that is consumed by the computing system, the efficiency of the computing system may be increased.

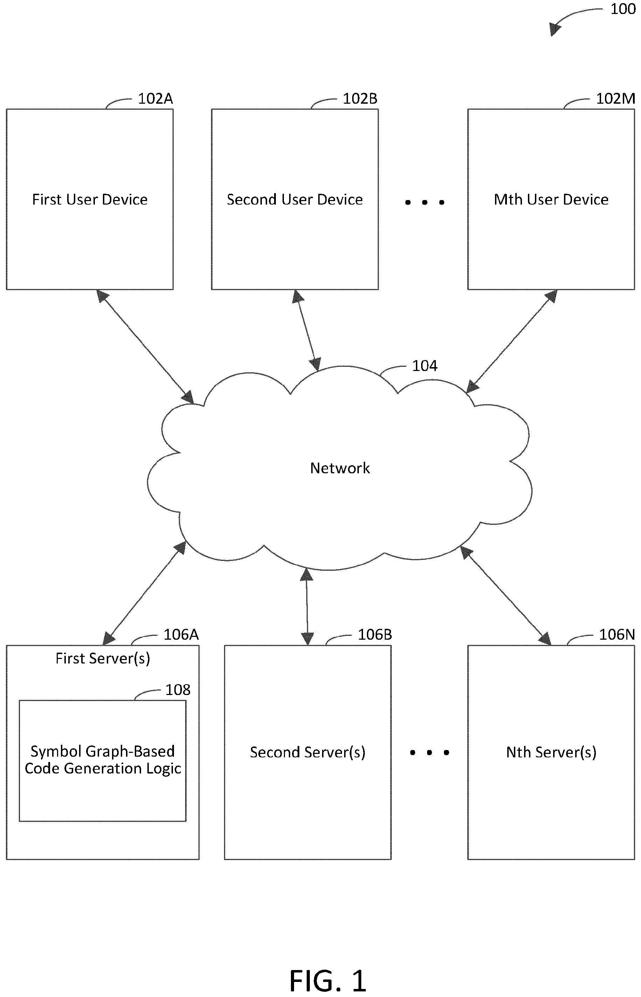

FIG. 1 is a block diagram of an example symbol graph-based code generation system 100 in accordance with an embodiment. Generally speaking, the symbol graph-based code generation system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the symbol graph-based code generation system 100 performs AI-based code generation using a dynamically constructed symbol graph and code skeletons. Detail regarding techniques for performing AI-based code generation using a dynamically constructed symbol graph and code skeletons is provided in the following discussion.

As shown in FIG. 1, the symbol graph-based code generation system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the complex expression-based metadata generation system 100.

One example type of computer program that may be executed by one or more of the servers 106A-106N is a developer tool. A developer tool is a computer program that performs diagnostic operations (e.g., identifying source of problem, debugging, profiling, controlling, etc.) with respect to program code. Examples of a developer tool include an integrated development environment (IDE) and a web development platform. Examples of an IDE include Microsoft Visual Studio^{®} IDE, developed and distributed by Microsoft Corporation; AppCode^{®} IDE, PhpStorm^{®} IDE, Rider^{®} IDE, WebStorm^{®} IDE, etc., developed and distributed by JetBrains s.r.o.; JDeveloper^{®} IDE, developed and distributed by Oracle International Corporation; NetBeans^{®} IDE, developed and distributed by Sun Microsystems, Inc.; Eclipse^{™} IDE, developed and distributed by Eclipse Foundation; and Android Studio^{™} IDE, developed and distributed by Google LLC and JetBrains s.r.o. Examples of a web development platform include Windows Azure^{®} platform, developed and distributed by Microsoft Corporation; Amazon Web Services^{®} platform, developed and distributed by Amazon.com, Inc.; Google App Engine^{®} platform, developed and distributed by Google LLC; VMWare^{®} platform, developed and distributed by VMWare, Inc.; and Force.com^{®} platform, developed and distributed by Salesforce, Inc. It will be recognized that the example techniques described herein may be implemented using a developer tool.

Another example type of a computer program that may be executed by one or more of the servers 106A-106N is a cloud computing program (a.k.a. cloud service). A cloud computing program is a computer program that provides hosted service(s) via a network (e.g., network 104). For instance, the hosted service(s) may be hosted by any one or more of the servers 106A-106N. The cloud computing program may enable users (e.g., at any of the user systems 102A-102M) to access shared resources that are stored on or are otherwise accessible to the server(s) via the network.

The cloud computing program may provide hosted service(s) according to any of a variety of service models, including but not limited to Backend as a Service (BaaS), Software as a Service (SaaS), Platform as a Service (PaaS), and Infrastructure as a Service (IaaS). BaaS enables applications (e.g., software programs) to use a BaaS provider's backend services (e.g., push notifications, integration with social networks, and cloud storage) running on a cloud infrastructure. SaaS enables a user to use a SaaS provider's applications running on a cloud infrastructure. PaaS enables a user to develop and run applications using a PaaS provider's application development environment (e.g., operating system, programming-language execution environment, database) on a cloud infrastructure. IaaS enables a user to use an IaaS provider's computer infrastructure (e.g., to support an enterprise). For example, IaaS may provide to the user virtualized computing resources that utilize the IaaS provider's physical computer resources.

Examples of a cloud computing program include Google Cloud^{®} program, developed and distributed by Google LLC; Oracle Cloud^{®} program, developed and distributed by Oracle Corporation; Amazon Web Services^{®} program, developed and distributed by Amazon.com, Inc.; Salesforce^{®} program, developed and distributed by Salesforce.com, Inc.; AppSource^{®} and Azure^{®} programs, developed and distributed by Microsoft Corporation; GoDaddy^{®} program, developed and distributed by GoDaddy.com LLC; and Rackspace^{®} program, developed and distributed by Rackspace US, Inc. It will be recognized that the example techniques described herein may be implemented using a cloud computing program. For instance, a software product (e.g., a subscription service, a non-subscription service, or a combination thereof) may include the cloud computing program, and the software product may be configured to perform the example techniques, though the scope of the example embodiments is not limited in this respect.

The first server(s) 106A are shown to include symbol graph-based code generation logic 108 for illustrative purposes. The symbol graph-based code generation logic 108 is configured to perform AI-based code generation using a dynamically constructed symbol graph and code skeletons. In an example implementation, the symbol graph-based code generation logic 108 receives a user-generated query. The user-generated query requests code that performs a specified function. The symbol graph-based code generation logic 108 dynamically constructs a symbol graph, which maps relationships between subsets of a plurality of symbols in a codebase based at least on receipt of the user-generated query. The symbol graph-based code generation logic 108 selects symbols from the plurality of symbols based at least on the symbols that are selected having relevancies to the user-generated query that satisfy a relevancy criterion by dynamically traversing the symbol graph. Based at least on the symbols being selected from the plurality of symbols, the symbol graph-based code generation logic 108 retrieves code skeletons associated with the symbols. Each code skeleton defines a structure of a symbol in the codebase and includes placeholder code in lieu of content of the symbol. The symbol graph-based code generation logic 108 causes an AI model to generate at least a portion of the code that performs the specified function from at least a subset of the symbols in the codebase by providing an AI prompt together with the code skeletons as inputs to the AI model. The AI prompt requests that the AI model provide the code that performs the specified function. The code skeletons include context regarding the AI prompt. The symbol graph-based code generation logic 108 receives a response to the AI prompt from the AI model. The response to the AI prompt includes at least the portion of the code that is generated by the AI model. The symbol graph-based code generation logic 108 triggers presentation of a response to the user-generated query. The response to the user-generated query includes at least the portion of the code that is generated by the AI model.

The symbol graph-based code generation logic 108 may be implemented in various ways to perform AI-based code generation using a dynamically constructed symbol graph and code skeletons, including being implemented in hardware, software, firmware, or any combination thereof. For example, the symbol graph-based code generation logic 108 may be implemented as computer program code configured to be executed in one or more processors. In another example, at least a portion of the symbol graph-based code generation logic 108 may be implemented as hardware logic/electrical circuitry. For instance, at least a portion of the symbol graph-based code generation logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

It will be recognized that the symbol graph-based code generation logic 108 may be (or may be included in) a developer tool and/or a cloud computing program, though the scope of the example embodiments is not limited in this respect.

The symbol graph-based code generation logic 108 is shown to be incorporated in the first server(s) 106A for illustrative purposes and is not intended to be limiting. It will be recognized that the symbol graph-based code generation logic 108 (or any portion(s) thereof) may be incorporated in any one or more of the servers 106A-106N, any one or more of the user devices 102A-102M, or any combination thereof. For example, client-side aspects of the symbol graph-based code generation logic 108 may be incorporated in one or more of the user devices 102A-102M, and server-side aspects of symbol graph-based code generation logic 108 may be incorporated in one or more of the servers 106A-106N.

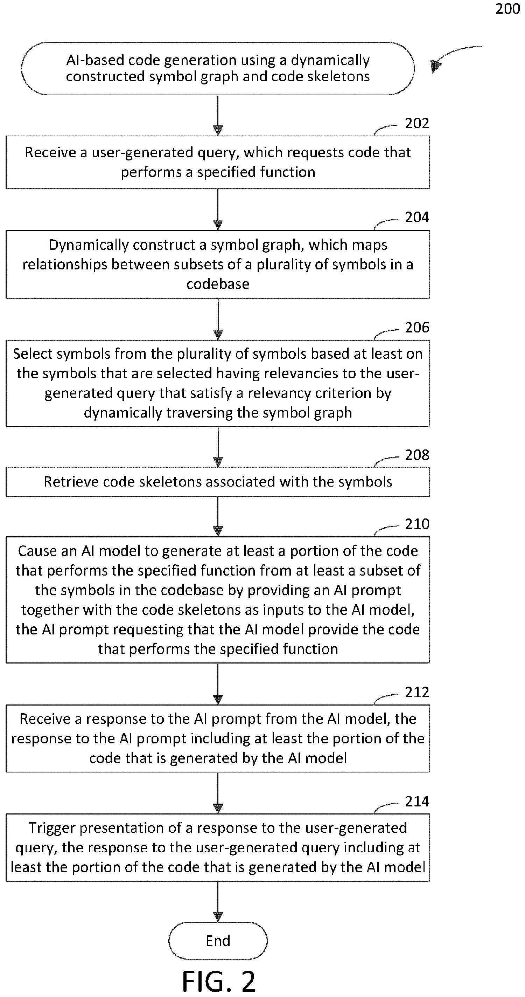

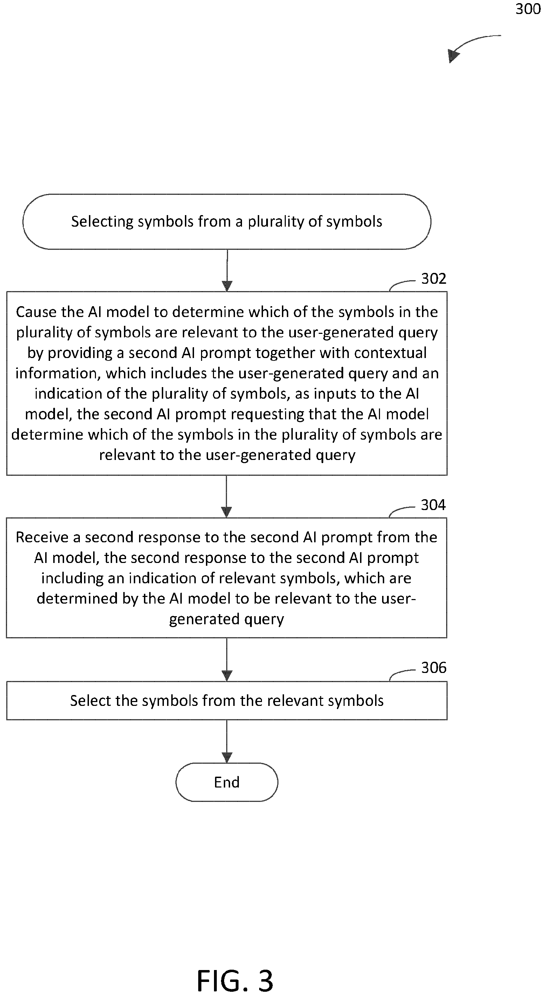

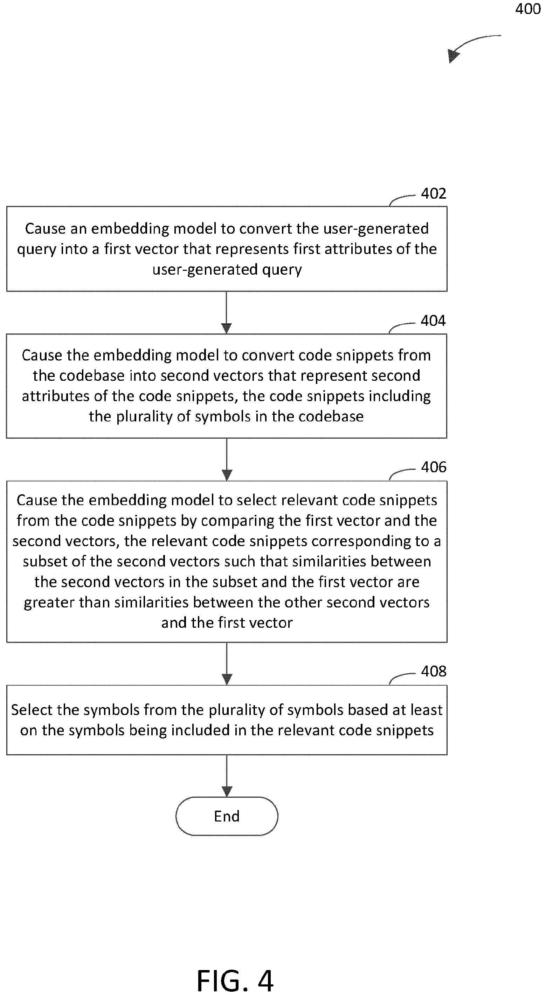

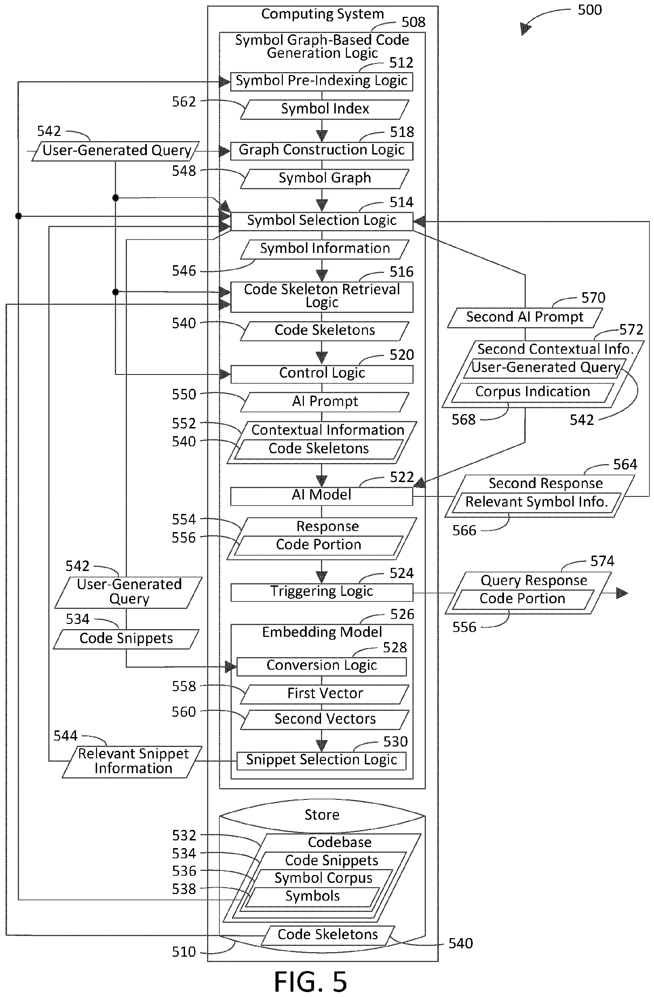

FIGS. 2 and 4 depict flowcharts 200 and 400 of example methods for performing AI-based code generation using a dynamically constructed symbol graph and code skeletons in accordance with embodiments. FIG. 3 depicts a flowchart 300 of an example method for selecting symbols from a plurality of symbols in accordance with an embodiment. Flowcharts 200, 300, and 400 may be performed by the first server(s) 106A shown in FIG. 1, for example. For illustrative purposes, flowcharts 200, 300, and 400 are described with respect to a computing system 500 shown in FIG. 5, which is an example implementation of the first server(s) 106A. As shown in FIG. 5, the computing system 500 includes symbol graph-based code generation logic 508 and a store 510. The symbol graph-based code generation logic 508 includes symbol pre-indexing logic 512, symbol selection logic 514, code skeleton retrieval logic 516, graph construction logic 518, control logic 520, an AI model 522, triggering logic 524, and an embedding model 526. The embedding model 526 includes conversion logic 528 and snippet selection logic 530. The store 510 may be any suitable type of store. One type of store is a database. For instance, the store 510 may be a relational database, an entity-relationship database, an object database, an object relational database, an extensible markup language (XML) database, etc. The store 510 is shown to store a codebase 532 and code skeletons 540 for non-limiting, illustrative purposes. The codebase 532 includes code snippets 534. The code snippets 534 include a plurality of symbols, which is referred to as a symbol corpus 536. The symbol corpus 536 includes symbols 538. In an aspect, the symbols 538 of the symbol corpus 536 are distributed among the code snippets 534. Each of the code snippets 534 may include any suitable number (e.g., 1, 2, 5, or 20), subset, or combination of the symbols 538. A code snippet 534 may include multiple instances of a same symbol. Further structural and operational embodiments will be apparent to persons skilled in the relevant art(s) based on the discussion regarding flowcharts 200, 300, and 400.

As shown in FIG. 2, the method of flowchart 200 begins at step 202. In step 202, a user-generated query is received. The user-generated query requests code that performs a specified function. In an example implementation, the graph construction logic 518 receives a user-generated query 542. The user-generated query 542 requests code that performs a specified function.

At step 204, based at least on receipt of the user-generated query, a symbol graph, which maps relationships between subsets of a plurality of symbols in a codebase, is dynamically constructed. For instance, the symbol graph may be constructed on-the-fly and/or in real time. In an aspect, construction of the symbol graph is triggered by receipt of the user-generated query. In another aspect, the symbol graph is dynamically constructed using a language-agnostic parser that is agnostic with respect to a programming language in which the symbols in the codebase are written. In accordance with this aspect, the language-agnostic parser is used to parse the symbols. In an example implementation, based at least on receipt of the user-generated query 542, the graph construction logic 518 dynamically constructs a symbol graph 548, which maps relationships between subsets of the symbol corpus 536 in the codebase 532. Each subset of the symbol corpus 536 includes a respective subset of the symbols 538.

At step 206, symbols are selected from the plurality of symbols based at least on the symbols that are selected having relevancies to the user-generated query that satisfy a relevancy criterion by dynamically traversing the symbol graph. In an example implementation, the symbol selection logic 514 selects the symbols 538 from the symbol corpus 536 based at least on the symbols 538 having relevancies to the user-generated query 542 that satisfy the relevancy criterion by dynamically traversing the symbol graph 548. In accordance with this implementation, the symbol selection logic 514 generates symbol information 546, which identifies the symbols 538 that are selected from the symbol corpus 536. For instance, the symbol information 546 may distinguish the symbols 538 from other symbols that are included in the symbol corpus 536.

In an example embodiment, selecting the symbols from the plurality of symbols at step 206 includes ranking the symbols to provide respective rankings by taking into consideration whether the symbols are publicly accessible. For instance, the ranking of each symbol may be based at least in part on whether the respective symbol is publicly accessible. In accordance with this embodiment, a symbol being publicly accessible weighs in favor of a relatively higher ranking of the symbol. In further accordance with this embodiment, the relevancies of the symbols are based at least on the respective rankings.

In another example embodiment, selecting the symbols from the plurality of symbols at step 206 includes ranking the symbols based at least on a type of each of the symbols to provide respective rankings. Examples of a type include but are not limited to a comment, a method, private code, and public code. In accordance with this embodiment, the symbols are selected from the plurality of symbols based at least on the respective rankings.

In yet another example embodiment, selecting the symbols from the plurality of symbols at step 206 includes selecting at least identified symbols from the plurality of symbols based at least on the identified symbols being included in a namespace that includes active code.

In still another example embodiment, selecting the symbols from the plurality of symbols at step 206 includes selecting at least identified symbols from the plurality of symbols based at least on the identified symbols being included in a folder that includes active code.

In another example embodiment, selecting the symbols from the plurality of symbols at step 206 includes selecting at least identified symbols from the plurality of symbols based at least on the identified symbols being used a number of times within a specified period of time that is greater than or equal to a threshold number of times.

In yet another example embodiment, selecting the symbols from the plurality of symbols at step 206 includes selecting at least identified symbols from the plurality of symbols based at least on the identified symbols being referenced in active code.

In an aspect of this embodiment, selecting the symbols from the plurality of symbols at step 206 further includes selecting at least second identified symbols from the plurality of symbols based at least on the second identified symbols being referenced in a dependency of the active code. For instance, the dependency may be defined (e.g., in source code) externally to the active code.

In another aspect of this embodiment, selecting the symbols from the plurality of symbols at step 206 further includes selecting at least second identified symbols from the plurality of symbols based at least on the second identified symbols being referenced in parent code that has a dependency on the active code.

In still another example embodiment, selecting the symbols from the plurality of symbols at step 206 includes iteratively eliminating subsets of the symbols in the plurality of symbols from the symbols on which the code skeletons are to be based using respective criteria until a number of the symbols on which the code skeletons are to be based is less than or equal to a threshold number. For example, in a first iteration, a first subset of the symbols in the plurality of symbols is eliminated from consideration to provide first remaining symbols on which the code skeletons are to be based. If a number of the first remaining symbols is greater than the threshold number, a second iteration is performed. In the second iteration, a second subset of the first remaining symbols is eliminated from consideration to provide second remaining symbols on which the code skeletons are to be based. If a number of the second remaining symbols is greater than the threshold number, a third iteration is performed. In the third iteration, a third subset of the second remaining symbols is eliminated from consideration to provide third remaining symbols on which the code skeletons are to be based, and so on until the number of remaining symbols is less than or equal to the threshold number. Examples of a criterion include but are not limited to (1) infrequently used symbol (i.e., symbol that is used a number of times within a specified period of time that is less than or equal to a threshold number of times); (2) punctuation (e.g., semicolon, brace); method deemed to be irrelevant; and class deemed to be irrelevant. In another example, the threshold number corresponds to a context size limit associated with the AI model. A context size limit is a maximum number of tokens that an AI model is capable of processing with an AI prompt.

In another example embodiment, selecting the symbols from the plurality of symbols at step 206 is based at least on each of the symbols that is selected being referenced in active code, a dependency of the active code, and/or parent code that has a dependency on the active code. In an example implementation, the symbol selection logic 514 selects the symbols 538 from the symbol corpus 536 based at least on each of the symbols 538 being referenced in active code, a dependency of the active code, and/or parent code that has a dependency on the active code. In accordance with this implementation, the symbol selection logic 514 generates symbol information 546, which identifies the symbols 538 that are selected from the symbol corpus 536.

At step 208, based at least on the symbols being selected from the plurality of symbols, code skeletons associated with the symbols are retrieved. Each code skeleton defines a structure of a symbol in the codebase and includes placeholder code in lieu of content of the symbol. In an aspect, retrieval of the code skeletons is triggered by selection of the symbols form the plurality of symbols at step 206. In another aspect, the codebase (or a portion thereof) and/or the code skeletons (or a subset thereof) are stored locally on a machine of a user from whom the user-generated query is received. In yet another aspect, the codebase (or a portion thereof) and/or the code skeletons (or a subset thereof) are stored externally to a machine of the user. In still another aspect, the codebase (or a portion thereof) and/or the code skeletons (or a subset thereof) are proprietary and private to an organization of the user. In another aspect, the codebase (or a portion thereof) and/or the code skeletons (or a subset thereof) are available to the general public. For instance, the codebase (or a portion thereof) and/or the code skeletons (or a subset thereof) may have been published by an entity (e.g., Microsoft Corporation, Google LLC, or Amazon.com, Inc.) since a time instance at which the AI model was trained.

In an example implementation, based at least on the symbols 538 being selected from the symbol corpus 536, the code skeleton retrieval logic 516 retrieves the code skeletons 540, which are associated with the symbols 538. For instance, the code skeleton retrieval logic 516 may retrieve the code skeletons 540 from the store 510 based at least on (e.g., in response to or as a result of) receipt of the symbol information 546 (e.g., based at least on the symbol information 546 identifying the symbols 538. Each of the code skeletons 540 defines a structure of a respective symbol in the symbol corpus 536 and includes placeholder code in lieu of content of the respective symbol. It will be recognized that the placeholder code in each of the code skeletons 540 need not necessarily replace an entirety of the content of the respective symbol. For instance, the placeholder code may be included in lieu of a portion (i.e., less than all) of the content of the respective symbol or in lieu of an entirety (i.e., all) of the content of the respective symbol. In an aspect, the code skeleton retrieval logic 516 generates each of the code skeletons 540 by analyzing the structure of the respective symbol in the symbol corpus 536. In accordance with this aspect, the code skeleton retrieval logic 516 may store the code skeletons 540 in the store 510 for subsequent retrieval. In response to retrieving the code skeletons 540, the code skeleton retrieval logic 516 provides the code skeletons 540 to the control logic 520.

In an example embodiment, the code skeletons are retrieved at step 208 in response to a code skeleton request, which requests the code skeletons, within 100 milliseconds from a time instance at which the code skeleton request is provided (e.g., initiated, generated, or sent). For instance, the code symbols being pre-indexed may enable the code skeletons to be retrieved within 100 milliseconds from the time instance at which the code skeleton request is provided.

At step 210, an AI model is caused to generate at least a portion of the code that performs the specified function from at least a subset of the symbols in the codebase by providing an AI prompt together with the code skeletons as inputs to the AI model. The AI prompt requests that the AI model provide the code that performs the specified function. The code skeletons include context regarding the AI prompt. In an aspect, step 208 includes causing the AI model to generate all of the code that performs the specified function. In another aspect, the AI model is trained on the codebase or a portion thereof prior to the AI prompt and the code skeletons being provided to the AI model. In yet another aspect, the AI model is not trained on the codebase prior to the AI prompt and the code skeletons being provided to the AI model. In an example implementation, the control logic 520 causes the AI model 522 to generate at least a code portion 556, which is a portion of the code that performs the specified function, from at least a subset of the symbols 538 in the codebase 532 by providing an AI prompt 550 together with contextual information 552, which includes the code skeletons 540, as inputs to the AI model 522. The AI prompt 550 requests that the AI model 522 provide the code that performs the specified function. The code skeletons 540 include context regarding the AI prompt 550.

In an example embodiment, the codebase corresponds to a particular project. In accordance with this embodiment, at least the portion of the code that is generated by the AI model is syntactically correct and semantically aligned with requirements and conventions of the particular project.

In another example embodiment, causing the AI model to generate at least the portion of the code at step 210 includes increasing an accuracy, a precision, and/or a reliability of the AI model in generating at least the portion of the code by providing the AI prompt together with the code skeletons as the inputs to the AI model.

In yet another example embodiment, causing the AI model to generate at least the portion of the code at step 210 includes providing the AI prompt together with contextual information that includes the code skeletons and an active document associated with a user from whom the user-generated query is received, as inputs to the AI model. The active document may be a document that includes code under development by a user from which the user-generated request is received, a document being accessed by the user (e.g., the user is typing in or viewing the document), a document presented in an open window on a machine (e.g., a physical machine or a virtual machine) of the user, a document presented in a window that is selected by the user (e.g., with a mouse, stylus, or finger), a document at which a cursor of the user is located, and so on. In accordance with this embodiment, the code skeletons and the active document include context regarding the AI prompt.

In still another example embodiment, the control logic 520 causes the AI model 522 to analyze (e.g., develop and/or refine an understanding of) the AI prompt 550 (e.g., the specified function described therein), contextual information 552 (e.g., the code skeletons 540 and/or an active document associated with a user of the computing system 500), relationships between any of the foregoing, and confidences in those relationships. For example, the control logic 520 may cause the AI model 522 to compare attributes of the AI prompt 550 and the contextual information 552 (which may include sample AI prompt(s), sample code skeletons, and sample active document(s)) using artificial intelligence to generate at least a portion of the code that performs the specified function.

In an aspect of this embodiment, the control logic 520 performs one or more pre-processing operations on the contextual information 552 (e.g., code that is being written by a user of the computing system 500) prior to providing the contextual information 552 to the AI model 522. Examples of a pre-processing operation include but are not limited to removing comma(s), slash(es), and/or white space(s) (e.g., tab(s) and/or redundant blank space(s)) from the contextual information 552.

In some example embodiments, the AI model 522 includes a neural network that uses the artificial intelligence to determine (e.g., predict) relationships between the AI prompt 550 and the contextual information 552 and confidences in the relationships. The neural network uses those relationships to generate (e.g., derive) at least a portion of the code that performs the specified function. For example, attributes of the AI prompt 550 and the contextual information 552 (which may include example AI prompt(s), example code skeletons, and example active document(s)) may be compared to determine similarities and differences between those attributes. In accordance with this example, the neural network may use those similarities and differences to generate at least a portion of the code that performs the specified function.

Examples of a neural network include but are not limited to a feed forward neural network and a transformer-based neural network. A feed forward neural network is an artificial neural network for which connections between units in the neural network do not form a cycle. The feed forward neural network allows data to flow forward (e.g., from the input nodes toward to the output nodes), but the feed forward neural network does not allow data to flow backward (e.g., from the output nodes toward to the input nodes). In an example embodiment, the control logic 520 employs a feed forward neural network to train the AI model 522, which is used to determine AI-based confidences. Such AI-based confidences may be used to determine likelihoods that events will occur.

A transformer-based neural network is a neural network that incorporates a transformer. A transformer is a deep learning model that utilizes attention to differentially weight the significance of each portion of sequential input data, such as natural language. Attention is a technique that mimics cognitive attention. Cognitive attention is a behavioral and cognitive process of selectively concentrating on a discrete aspect of information while ignoring other perceivable aspects of the information. Accordingly, the transformer uses the attention to enhance some portions of the input data while diminishing other portions. The transformer determines which portions of the input data to enhance and which portions of the input data to diminish based on the context of each portion. For instance, the transformer may be trained to identify the context of each portion using any suitable technique, such as gradient descent.

In an example embodiment, the transformer-based neural network generates a code generation model (e.g., to generate at least portion(s) of code that perform specified function(s)) by utilizing information, such as AI prompts (e.g., the AI prompt 550), contextual information (e.g., contextual information 552), relationships between any of the foregoing, and AI-based confidences that are derived therefrom.

In some example embodiments, the AI prompt 550 includes training logic, and the AI model 522 includes inference logic. The training logic is configured to train an AI algorithm that the inference logic uses to determine (e.g., infer) the AI-based confidences. For instance, the training logic may provide sample AI prompt(s) and sample contextual information (e.g., sample code skeletons and sample active document(s)) as inputs to the AI algorithm to train the AI algorithm. The sample data may be labeled. The AI algorithm may be configured to derive relationships between the features (e.g., the AI prompt 550 and the contextual information 552) and the resulting AI-based confidences. The inference logic is configured to utilize the AI algorithm, which is trained by the training logic, to determine the AI-based confidence when the features are provided as inputs to the algorithm.

In an example embodiment, the AI model 522 includes (e.g., is) a generative language model. A generative language model is an AI model that is capable of generating original text output based on sample data. Examples of a generative language model include but are not limited to a generative pre-trained transformer 3 (a.k.a., GPT-3^{®}) model and a generative pre-trained transformer 4 (a.k.a. GPT-4^{®}) model, developed and distributed by OpenAI, Inc.; a large language model Meta AI (a.k.a. LLaMA^{®}) model, developed and distributed by Meta Platforms Inc.; a language model for dialogue applications (a.k.a., LaMDA^{®}) model, developed and distributed by Google LLC; and a BigScience large open-science open-access multilingual language model (a.k.a. BLOOM) model, developed and distributed by the BigScience collaborative initiative. A generative language model may use any suitable relevancy determination and/or ranking technique. For instance, the generative language model may use a BM25 (a.k.a. Okapi BM25) ranking function to perform its analysis (e.g., based on keywords).

In another example embodiment, the AI model 522 includes a large language model (LLM). A large language model is an artificial neural network that is capable of performing natural language processing (NLP) tasks. For instance, the large language model may use a transformer model to perform the NLP tasks. In an aspect, the large language model is trained (e.g., pre-trained) using self-supervised learning and semi-supervised learning. Examples of a large language model include but are not limited to the GPT-3^{®} and GPT-4^{®} models, developed and distributed by OpenAI, Inc.; the LLaMA^{®} model, developed and distributed by Meta Platforms Inc.; and a pathways language model (a.k.a., PaLM^{®}) model, developed and distributed by Google LLC.

In yet another example embodiment, the AI model 522 includes an embedding model. An embedding model is an AI model that uses deep learning to convert data into vectors, which represent attributes of the data, and that compares at least a subset of the vectors to determine an extent to which the vectors that are included in the subset are similar. For instance, each vector may represent a semantic meaning of an AI prompt, a symbol graph, or an active document.

In still another example embodiment, the AI model 522 includes multiple types of AI models. Weights may be applied to the responses generated by the respective types of AI models. For example, the AI model 522 may include a generative AI model and an embedding model. In accordance with this example, a first weight may be applied to a first response generated by the generative AI model to provide a first weighted response, and a second weight that is different from the first weight may be applied to a second response of the embedding model to provide a second weighted response. The AI model 522 may combine (e.g., sum) the first weighted response and the second weighted response to generate a response of the AI model 522.

At step 212, a response to the AI prompt is received from the AI model. The response to the AI prompt includes at least the portion of the code that is generated by the AI model. In an aspect, the AI model generates all of the code that performs the specified function, and the response to the AI prompt includes all of the code. In another aspect, at least the portion of the code includes (e.g., is) source code (e.g., written in a programming language). In another aspect, at least the portion of the code includes pseudocode (e.g., not written in a programming language). In yet another aspect, the response includes natural language text. For example, the natural language text may reference the portion of the code. In accordance with this example, the natural language text may state, "Here is what you asked for" or "Here is an example of how you might write the code that you requested." In an example implementation, the triggering logic 524 receives a response 554 to the AI prompt 550 from the AI model 522. The response 554 to the AI prompt 550 includes at least the code portion 556 that is generated by the AI model 522.

At step 214, as a result of receiving the response to the AI prompt from the AI model, presentation of a response to the user-generated query is triggered. The response to the user-generated query includes at least the portion of the code that is generated by the AI model. In an aspect, the AI model generates all of the code that performs the specified function, and the response to the user-generated query includes all of the code. In an example implementation, as a result of receiving the response 554 to the AI prompt 550 from the AI model 522, the triggering logic 524 triggers presentation of a query response 574 in response to the user-generated query 542. The response 574 to the user-generated query 542 includes at least the code portion 556 that is generated by the AI model 522.

In an example embodiment, triggering the presentation of the response to the user-generated query includes increasing efficiency of a user from whom the user-generated query is received by presenting at least the portion of the code that is generated by the AI model to the user.

In another example embodiment, the user-generated query is received at step 202 from a user. In accordance with this embodiment, step 214 includes triggering the presentation of the response to the user-generated query to the user.

In yet another example embodiment, the response from the AI model further includes a description (e.g., natural language description) of a second portion of the code in lieu of the second portion of the code. In an aspect, the description of the second portion of the code identifies operations that are to be performed by the second portion of the code. For example, the description of the second portion of the code may include instructions for writing methods, which are configured to perform the operations, in the second portion of the code. In accordance with this example, the instructions for writing the methods may be configured to enable the user to write the methods. In another example, the description of the second portion of the code may be pseudo code, which is not an executable program. For instance, the pseudo code may include code written in a programming language augmented with natural language description(s) and/or mathematical notation(s). In accordance with this embodiment, the response to the user-generated query includes the description of the second portion of the code in lieu of the second portion of the code. Accordingly, the response from the AI model does not include the second portion of the code, and the response to the user-generated query does not include the second portion of the code.

In some example embodiments, one or more steps 202, 204, 206, 208, 210, 212, and/or 214 of flowchart 200 may not be performed. Moreover, steps in addition to or in lieu of steps 202, 204, 206, 208, 210, 212, and/or 214 may be performed. For instance, in an example pre-indexing embodiment, the method of flowchart 200 further includes pre-indexing the symbols in the codebase to provide an index of the symbols (e.g., and relationships therebetween) prior to the symbol graph being dynamically constructed. In an aspect, providing the index includes creating the index. In accordance with this aspect, the index is created based on (e.g., based at least on) an entirety of the codebase (e.g., all symbols in the codebase) without consideration of particular search criteria. In another aspect, the index indicates locations of the symbols in the codebase. In yet another aspect, indexing the symbols includes sorting the symbols with regard to multiple fields. For example, creating an index on a field in a table may create another data structure that holds a value of the field and a pointer to a corresponding record. In accordance with this example, the resulting index structure may be sorted, which enables binary searches to be performed on the index structure. In an example implementation, the symbol pre-indexing logic 512 pre-indexes the symbols 538 in the codebase 532 to provide a symbol index 562, which indexes the symbols 538, prior to the symbol graph 548 being dynamically constructed. In accordance with this embodiment, the symbol graph is dynamically constructed at step 204 using the index of the symbols. In accordance with an implementation, the graph construction logic 518 dynamically constructs the symbol graph 548 using the symbol index 562.

In an aspect of the pre-indexing embodiment, the symbols are pre-indexed in the codebase in accordance with a language server index format (LSIF) standard to provide the index of the symbols prior to the symbol graph being dynamically constructed. LSIF is a standard that supports (e.g., enables) navigation of source code in a development tool or a web user interface (UI) without a need for a local copy of the source code. Accordingly, the source code may be stored externally to (e.g., remotely from) a machine on which the navigation is performed. In an example, the LSIF defines a standard format for language servers or other programming tools to emit their knowledge about a code workspace (e.g., codebase 532) to provide persisted information, which subsequently may be used to answer LSP requests for the same workspace without running a language server. An LSP request is a request that conforms to an LSP protocol. The LSP protocol is an open, JSON-RPC-based protocol for use between a text editor (e.g., a source code editor) or a development tool and a server that provides a language tool, such as a programming language-specific feature. Examples of a programming language-specific feature include but are not limited to code completion, syntax highlighting, marking a warning, marking an error, code refactoring, and code navigation.

In another example embodiment, selecting the symbols from the plurality of symbols at step 206 includes one or more of the steps shown in flowchart 300 of FIG. 3. As shown in FIG. 3, the method of flowchart 300 begins at step 302. In step 302, the AI model is caused to determine which of the symbols in the plurality of symbols are relevant to the user-generated query by providing a second AI prompt together with contextual information, which includes the user-generated query and an indication of the plurality of symbols, as inputs to the AI model. The second AI prompt requests that the AI model determine which of the symbols in the plurality of symbols are relevant to the user-generated query. The user-generated query and the indication of the plurality of symbols include context regarding the second AI prompt. In an example implementation, the symbol selection logic 514 causes the AI model 522 to determine which of the symbols in the symbol corpus 536 are relevant to the user-generated query 542 by providing a second AI prompt 570 together with second contextual information 572, which includes the user-generated query 542 and a corpus indication 568 that indicates the symbol corpus 536, as inputs to the AI model 522. The second AI prompt 570 requests that the AI model 522 determine which of the symbols in the symbol corpus 536 are relevant to the user-generated query 542. The user-generated query 542 and the corpus indication 568 include context regarding the second AI prompt 570.

At step 304, a second response to the second AI prompt is received from the AI model. The second response to the second AI prompt includes an indication of relevant symbols, which are determined by the AI model to be relevant to the user-generated query. In an example implementation, the symbol selection logic 514 receives a second response 564 to the second AI prompt 570 from the AI model 522. The second response 564 to the second AI prompt 570 includes relevant symbol information 566. The relevant symbol information 566 indicates relevant symbols, which are determined by the AI model 522 to be relevant to the user-generated query 542.

At step 306, the symbols are selected from the relevant symbols. In an example implementation, the symbol selection logic 514 selects the symbols 538 from the relevant symbols.

In yet another example embodiment, the method of flowchart 200 includes one or more of the steps shown in flowchart 400 of FIG. 4. As shown in FIG. 4, the method of flowchart 400 begins at step 402. In step 402, an embedding model is caused to convert the user-generated query into a first vector that represents first attributes of the user-generated query. In an example implementation, the symbol selection logic 514 causes the conversion logic 528, which is included in the embedding model 526, to convert the user-generated query 542 into a first vector 558 that represents first attributes of the user-generated query 542.

At step 404, the embedding model is caused to convert code snippets from the codebase into second vectors that represent second attributes of the code snippets. The code snippets include the symbols in the codebase. In an example implementation, the symbol selection logic 514 causes the conversion logic 528 in the embedding model 526 to convert the code snippets 534 from the codebase 532 into second vectors 560 that represent second attributes of the code snippets 534. The code snippets 534 include the symbols 538 in the codebase 532.

At step 406, the embedding model is caused to select relevant code snippets from the code snippets by comparing the first vector and the second vectors. The relevant code snippets correspond to a subset of the second vectors such that similarities between the second vectors in the subset and the first vector are greater than similarities between the other second vectors and the first vector. The extents to which the first vector and the second vectors are similar may be determined using any suitable similarity determination technique(s). Examples of a similarity determination technique include but are not limited to a cosine similarity technique, a Euclidean distance technique, and a dot product similarity technique. In an example implementation, the symbol selection logic 514 causes the snippet selection logic 530, which is included in the embedding model 526, to select the relevant code snippets from the code snippets 534 by comparing the first vector 558 and the second vectors 560. The relevant code snippets correspond to a subset of the second vectors 560 such that similarities between the second vectors 560 in the subset and the first vector 558 are greater than similarities between the other second vectors and the first vector 558. The snippet selection logic 530 generates relevant snippet information 544, which indicates (e.g., specifies or identifies) the relevant code snippets.

At step 408, the symbols are selected from the plurality of symbols based at least on the symbols being included in the relevant code snippets. In an example implementation, the symbol selection logic 514 selects the symbols 538 from the symbol corpus 536 based at least on the symbols 538 being included in the relevant code snippets. In an aspect, step 408 is included in step 206 shown in FIG. 2.

It will be recognized that the computing system 500 may not include one or more of the symbol graph-based code generation logic 508, the store 510, the symbol pre-indexing logic 512, the symbol selection logic 514, the code skeleton retrieval logic 516, the graph construction logic 518, the control logic 520, the AI model 522, the triggering logic 524, the embedding model 526, the conversion logic 528, and/or the snippet selection logic 530. Furthermore, the computing system 500 may include components in addition to or in lieu of the symbol graph-based code generation logic 508, the store 510, the symbol pre-indexing logic 512, the symbol selection logic 514, the code skeleton retrieval logic 516, the graph construction logic 518, the control logic 520, the AI model 522, the triggering logic 524, the embedding model 526, the conversion logic 528, and/or the snippet selection logic 530.

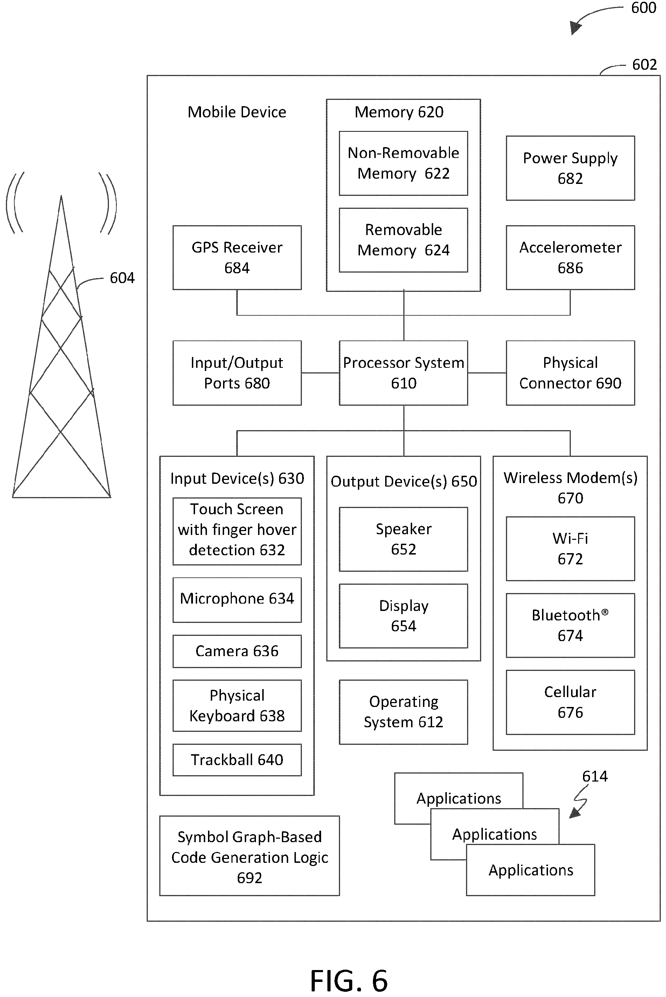

FIG. 6 is a system diagram of an example mobile device 600 including a variety of optional hardware and software components, shown generally as 602. Any components 602 in the mobile device may communicate with any other component, though not all connections are shown, for ease of illustration. The mobile device 600 may be any of a variety of computing devices (e.g., cell phone, smartphone, handheld computer, Personal Digital Assistant (PDA), etc.) and may allow wireless two-way communications with one or more mobile communications networks 604, such as a cellular or satellite network, or with a local area or wide area network.

The mobile device 600 includes a processor system 610 (e.g., signal processor, microprocessor, ASIC, or other control and processing logic circuitry) for performing such tasks as signal coding, data processing, input/output processing, power control, and/or other functions. An operating system 612 may control the allocation and usage of the components 602 and support for one or more applications 614 (a.k.a. application programs). The applications 614 may include common mobile computing applications (e.g., email applications, calendars, contact managers, web browsers, messaging applications) and any other computing applications (e.g., word processing applications, mapping applications, media player applications).

The mobile device 600 includes symbol graph-based code generation logic 692, which is operable in a manner similar to the symbol graph-based code generation logic 108 described above with reference to FIG. 1 and/or the symbol graph-based code generation logic 508 described above with reference to FIG. 5.

The mobile device 600 includes memory 620. The memory 620 may include non-removable memory 622 and/or removable memory 624. The non-removable memory 622 may include random access memory (RAM), read-only memory (ROM), flash memory, a hard disk, or other well-known memory storage technologies. The removable memory 624 may include flash memory or a Subscriber Identity Module (SIM) card, which is well known in Global System for Mobile Communications (GSM) systems, or other well-known memory storage technologies, such as "smart cards." The memory 620 may store data and/or code for running the operating system 612 and the applications 614. Example data may include web pages, text, images, sound files, video data, or other data sets to be sent to and/or received from one or more network servers or other devices via one or more wired or wireless networks. Memory 620 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 600 may support one or more input devices 630, such as a touch screen 632, microphone 634, camera 636, physical keyboard 638 and/or trackball 640 and one or more output devices 650, such as a speaker 652 and a display 654. Touch screens, such as the touch screen 632, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 632 may support a finger hover detection using capacitive sensing, as is well understood. Other detection techniques may be used, including camera-based detection and ultrasonic-based detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

Other possible output devices (not shown) may include piezoelectric or other haptic output devices. Some devices may serve more than one input/output function. For example, touch screen 632 and display 654 may be combined in a single input/output device. The input devices 630 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (e.g., electroencephalography (EEG) and related methods). Thus, in one specific example, the operating system 612 or applications 614 may include speech-recognition software as part of a voice control interface that allows a user to operate the mobile device 600 via voice commands. Furthermore, the mobile device 600 may include input devices and software that allows for user interaction via a user's spatial gestures, such as detecting and interpreting gestures to provide input to a gaming application.

Wireless modem(s) 670 may be coupled to antenna(s) (not shown) and may support two-way communications between the processor system 610 and external devices, as is well understood in the art. The modem(s) 670 are shown generically and may include a cellular modem 676 for communicating with the mobile communication network 604 and/or other radio-based modems (e.g., Bluetooth^{®} 674 and/or Wi-Fi 672). At least one of the wireless modem(s) 670 is typically configured for communication with one or more cellular networks, such as a GSM network for data and voice communications within a single cellular network, between cellular networks, or between the mobile device and a public switched telephone network (PSTN).

The mobile device 600 may further include at least one input/output port 680, a power supply 682, a satellite navigation system receiver 684, such as a Global Positioning System (GPS) receiver, an accelerometer 686, and/or a physical connector 690, which may be a universal serial bus (USB) port, IEEE 1394 (FireWire) port, and/or RS-232 port. The illustrated components 602 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the symbol graph-based code generation logic 108, the symbol graph-based code generation logic 508, the store 510, the symbol pre-indexing logic 512, the symbol selection logic 514, the code skeleton retrieval logic 516, the graph construction logic 518, the control logic 520, the AI model 522, the triggering logic 524, the embedding model 526, the conversion logic 528, the snippet selection logic 530, flowchart 200, flowchart 300, and/or flowchart 400 may be implemented in hardware, software, firmware, or any combination thereof.

For example, any one or more of the symbol graph-based code generation logic 108, the symbol graph-based code generation logic 508, the store 510, the symbol pre-indexing logic 512, the symbol selection logic 514, the code skeleton retrieval logic 516, the graph construction logic 518, the control logic 520, the AI model 522, the triggering logic 524, the embedding model 526, the conversion logic 528, the snippet selection logic 530, flowchart 200, flowchart 300, and/or flowchart 400 may be implemented, at least in part, as computer program code configured to be executed in one or more processors.

In another example, any one or more of the symbol graph-based code generation logic 108, the symbol graph-based code generation logic 508, the store 510, the symbol pre-indexing logic 512, the symbol selection logic 514, the code skeleton retrieval logic 516, the graph construction logic 518, the control logic 520, the AI model 522, the triggering logic 524, the embedding model 526, the conversion logic 528, the snippet selection logic 530, flowchart 200, flowchart 300, and/or flowchart 400 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

Techniques are described herein that are capable of performing AI-based code generation using a dynamically constructed symbol graph and code skeletons. A query, which requests code, is received. A symbol graph, which maps relationships between subsets of a symbol corpus, is dynamically constructed. Symbols are selected from the symbol corpus based on relevancy to the user-generated query. Code skeletons associated with the symbols are retrieved. An AI model is caused to generate at least a portion of the code from at least a subset of the symbols by providing an AI prompt, which requests the code, together with the code skeletons as inputs to the AI model. A response to the AI prompt, including at least the portion of the code, is received from the AI model. Presentation of a response to the query is triggered. The response to the query includes at least the portion of the code.

### II. Further Discussion of Some Example Embodiments

(A1) An example system (Figure 1, 102A-102M, 106A-106N; Figure 5, 500; Figure 6, 602; Figure 7, 700) comprises a processor system (Figure 6, 610; Figure 7, 702) and a memory (Figure 6, 620, 622, 624; Figure 7, 704, 708, 710) that stores computer-executable instructions. The computer-executable instructions are executable by the processor system to at least receive (Figure 2, 202) a user-generated query (Figure 5, 542). The user-generated query requests code that performs a specified function. The computer-executable instructions are executable by the processor system further to at least, in response to receiving the user-generated query, dynamically construct (Figure 2, 204) a symbol graph (Figure 5, 548), which maps relationships between subsets of a plurality of symbols (Figure 5, 536) in a codebase (Figure 5, 532). The computer-executable instructions are executable by the processor system further to at least select (Figure 2, 206) symbols (Figure 5, 538) from the plurality of symbols in response to the symbols that are selected having relevancies to the user-generated query that satisfy a relevancy criterion by dynamically traversing the symbol graph. The computer-executable instructions are executable by the processor system further to at least, in response to the symbols being selected from the plurality of symbols, retrieve (Figure 2, 208) code skeletons (Figure 5, 540) associated with the symbols. Each code skeleton defines a structure of a symbol in the codebase and includes placeholder code in lieu of content of the symbol. The computer-executable instructions are executable by the processor system further to at least cause (Figure 2, 210) an AI model (Figure 5, 522) to generate at least a portion of the code that performs the specified function from at least a subset of the symbols in the codebase by providing an AI prompt (Figure 5, 550) together with the code skeletons as inputs to the AI model. The AI prompt requests that the AI model provide the code that performs the specified function. The code skeletons comprise context regarding the AI prompt. The computer-executable instructions are executable by the processor system further to at least receive (Figure 2, 212) a response (Figure 5, 554) to the AI prompt from the AI model. The response to the AI prompt includes at least the portion of the code that is generated by the AI model. The computer-executable instructions are executable by the processor system further to at least, as a result of receiving the response to the AI prompt from the AI model, trigger (Figure 2, 214) presentation of a response (Figure 5, 574) to the user-generated query. The response to the user-generated query includes at least the portion of the code that is generated by the AI model.

(A2) In the example system of A1, wherein the computer-executable instructions are executable by the processor system to at least: increase at least one of an accuracy, a precision, or a reliability of the AI model in generating at least the portion of the code by providing the AI prompt together with the code skeletons as the inputs to the AI model.

(A3) In the example system of any of A1-A2, wherein the computer-executable instructions are executable by the processor system to at least: increase efficiency of a user from whom the user-generated query is received by presenting at least the portion of the code that is generated by the AI model to the user.

(A4) In the example system of any of A1-A3, wherein the computer-executable instructions are executable by the processor system to at least: cause the AI model to determine which of the symbols in the plurality of symbols are relevant to the user-generated query by providing a second AI prompt together with contextual information, which includes the user-generated query and an indication of the plurality of symbols, as inputs to the AI model, the second AI prompt requesting that the AI model determine which of the symbols in the plurality of symbols are relevant to the user-generated query, wherein the user-generated query and the indication of the plurality of symbols comprise context regarding the second AI prompt; receive a second response to the second AI prompt from the AI model, the second response to the second AI prompt including an indication of relevant symbols, which are determined by the AI model to be relevant to the user-generated query; and select the symbols from the relevant symbols.

(A5) In the example system of any of A1-A4, wherein the computer-executable instructions are executable by the processor system to: rank the symbols to provide respective rankings by taking into consideration whether the symbols are publicly accessible; wherein a symbol being publicly accessible weighs in favor of a relatively higher ranking of the symbol; and wherein the relevancies of the symbols take into consideration the respective rankings.

(A6) In the example system of any of A1-A5, wherein the computer-executable instructions are executable by the processor system to: rank the symbols by taking into consideration a type of each of the symbols to provide respective rankings; and wherein the symbols are selected from the plurality of symbols using the respective rankings.

(A7) In the example system of any of A1-A6, wherein the computer-executable instructions are executable by the processor system to: select at least identified symbols from the plurality of symbols in response to the identified symbols being included in a namespace that includes active code.

(A8) In the example system of any of A1-A7, wherein the computer-executable instructions are executable by the processor system to: select at least identified symbols from the plurality of symbols in response to the identified symbols being included in a folder that includes active code.

(A9) In the example system of any of A1-A8, wherein the computer-executable instructions are executable by the processor system to: select at least identified symbols from the plurality of symbols in response to the identified symbols being used a number of times within a specified period of time that is greater than or equal to a threshold number of times.

(A10) In the example system of any of A1-A9, wherein the computer-executable instructions are executable by the processor system to: select at least identified symbols from the plurality of symbols in response to the identified symbols being referenced in active code.

(A11) In the example system of any of A1-A10, wherein the computer-executable instructions are executable by the processor system to: select at least second identified symbols from the plurality of symbols in response to the second identified symbols being referenced in a dependency of the active code.

(A12) In the example system of any of A1-A11, wherein the computer-executable instructions are executable by the processor system to: select at least second identified symbols from the plurality of symbols in response to the second identified symbols being referenced in parent code that has a dependency on the active code.

(A13) In the example system of any of A1-A12, wherein the computer-executable instructions are executable by the processor system to: iteratively eliminate subsets of the symbols in the plurality of symbols from the symbols that are to be used to retrieve the code skeletons using respective criteria until a number of the symbols that are to be used to retrieve the code skeletons is less than or equal to a threshold number.

(A14) In the example system of any of A1-A13, wherein the computer-executable instructions are executable by the processor system to: select the symbols from the plurality of symbols in response to each of the symbols that is selected being referenced in at least one of active code, a dependency of the active code, or parent code that has a dependency on the active code.

(A15) In the example system of any of A1-A14, wherein the computer-executable instructions are executable by the processor system to at least: provide the AI prompt together with contextual information that includes the code skeletons and an active document associated with a user from whom the user-generated query is received, as inputs to the AI model; and wherein the code skeletons and the active document comprise context regarding the AI prompt.

(A16) In the example system of any of A1-A15, wherein the response from the AI model further includes a description of a second portion of the code in lieu of the second portion of the code; and wherein the response to the user-generated query includes the description of the second portion of the code in lieu of the second portion of the code.

(A17) In the example system of any of A1-A16, wherein the computer-executable instructions are executable by the processor system to at least: pre-index the symbols in the codebase to provide an index of the symbols prior to the symbol graph being dynamically constructed; and dynamically construct the symbol graph using the index of the symbols.

(A18) In the example system of any of A1-A17, wherein the computer-executable instructions are executable by the processor system to at least: pre-index the symbols in the codebase in accordance with a language server index format (LSIF) standard to provide the index of the symbols prior to the symbol graph being dynamically constructed.

(A19) In the example system of any of A1-A18, wherein the computer-executable instructions are executable by the processor system to at least: receive the code skeletons in response to a code skeleton request, which requests the code skeletons, within 100 milliseconds from a time instance at which the code skeleton request is provided.

(A20) In the example system of any of A1-A19, wherein the computer-executable instructions are executable by the processor system to: cause an embedding model to convert the user-generated query into a first vector that represents first attributes of the user-generated query; cause the embedding model to convert code snippets from the codebase into second vectors that represent second attributes of the code snippets, the code snippets including the plurality of symbols in the codebase; cause the embedding model to select relevant code snippets from the code snippets by comparing the first vector and the second vectors, the relevant code snippets corresponding to a subset of the second vectors such that similarities between the second vectors in the subset and the first vector are greater than similarities between the other second vectors and the first vector; and select the symbols from the plurality of symbols in response to the symbols being included in the relevant code snippets.

(B1) An example method is implemented by a computing system (Figure 1, 102A-102M, 106A-106N; Figure 5, 500; Figure 6, 602; Figure 7, 700). The method comprises receiving (Figure 2, 202) a user-generated query (Figure 5, 542). The user-generated query requests code that performs a specified function. The method further comprises, in response to receiving the user-generated query, dynamically constructing (Figure 2, 204) a symbol graph (Figure 5, 548), which maps relationships between subsets of a plurality of symbols (Figure 5, 536) in a codebase (Figure 5, 532). The method further comprises selecting (Figure 2, 206) symbols (Figure 5, 538) from the plurality of symbols in response to the symbols that are selected having relevancies to the user-generated query that satisfy a relevancy criterion by dynamically traversing the symbol graph. The method further comprises, in response to the symbols being selected from the plurality of symbols, retrieving (Figure 2, 208) code skeletons (Figure 5, 540) associated with the symbols. Each code skeleton defines a structure of a symbol in the codebase and includes placeholder code in lieu of content of the symbol. The method further comprises causing (Figure 2, 210) an AI model (Figure 5, 522) to generate at least a portion of the code that performs the specified function from at least a subset of the symbols in the codebase by providing an AI prompt (Figure 5, 550) together with the code skeletons as inputs to the AI model. The AI prompt requests that the AI model provide the code that performs the specified function. The code skeletons comprise context regarding the AI prompt. The method further comprises receiving (Figure 2, 212) a response (Figure 5, 554) to the AI prompt from the AI model. The response to the AI prompt includes at least the portion of the code that is generated by the AI model. The method further comprises, as a result of receiving the response to the AI prompt from the AI model, triggering (Figure 2, 214) presentation of a response (Figure 5, 574) to the user-generated query. The response to the user-generated query includes at least the portion of the code that is generated by the AI model.

(B2) In the example method of B1, wherein causing the AI model to generate at least the portion of the code comprises: increasing at least one of an accuracy, a precision, or a reliability of the AI model in generating at least the portion of the code by providing the AI prompt together with the code skeletons as the inputs to the AI model.

(B3) In the example method of any of B 1-B2, wherein triggering the presentation of the response to the user-generated query comprises: increasing efficiency of a user from whom the user-generated query is received by presenting at least the portion of the code that is generated by the AI model to the user.

(B4) In the example method of any of B 1-B3, wherein selecting the symbols from the plurality of symbols comprises: causing the AI model to determine which of the symbols in the plurality of symbols are relevant to the user-generated query by providing a second AI prompt together with contextual information, which includes the user-generated query and an indication of the plurality of symbols, as inputs to the AI model, the second AI prompt requesting that the AI model determine which of the symbols in the plurality of symbols are relevant to the user-generated query, wherein the user-generated query and the indication of the plurality of symbols comprise context regarding the second AI prompt; receiving a second response to the second AI prompt from the AI model, the second response to the second AI prompt including an indication of relevant symbols, which are determined by the AI model to be relevant to the user-generated query; and selecting the symbols from the relevant symbols.

(B5) In the example method of any of B1-B4, wherein selecting the symbols from the plurality of symbols comprises: ranking the symbols to provide respective rankings by taking into consideration whether the symbols are publicly accessible; wherein a symbol being publicly accessible weighs in favor of a relatively higher ranking of the symbol; and wherein the relevancies of the symbols take into consideration the respective rankings.

(B6) In the example method of any of B1-B5, wherein selecting the symbols from the plurality of symbols comprises: ranking the symbols by taking into consideration a type of each of the symbols to provide respective rankings; and wherein the symbols are selected from the plurality of symbols using the respective rankings.

(B7) In the example method of any of B 1-B6, wherein selecting the symbols from the plurality of symbols comprises: selecting at least identified symbols from the plurality of symbols in response to the identified symbols being included in a namespace that includes active code.

(B8) In the example method of any of B1-B7, wherein selecting the symbols from the plurality of symbols comprises: selecting at least identified symbols from the plurality of symbols in response to the identified symbols being included in a folder that includes active code.

(B9) In the example method of any of B1-B8, wherein selecting the symbols from the plurality of symbols comprises: selecting at least identified symbols from the plurality of symbols in response to the identified symbols being used a number of times within a specified period of time that is greater than or equal to a threshold number of times.

(B10) In the example method of any of B 1-B9, wherein selecting the symbols from the plurality of symbols comprises: selecting at least identified symbols from the plurality of symbols in response to the identified symbols being referenced in active code.

(B11) In the example method of any of B1-B10, wherein selecting the symbols from the plurality of symbols further comprises: selecting at least second identified symbols from the plurality of symbols in response to the second identified symbols being referenced in a dependency of the active code.

(B12) In the example method of any of B1-B11, wherein selecting the symbols from the plurality of symbols further comprises: selecting at least second identified symbols from the plurality of symbols in response to the second identified symbols being referenced in parent code that has a dependency on the active code.

(B13) In the example method of any of B1-B12, wherein selecting the symbols from the plurality of symbols comprises: iteratively eliminating subsets of the symbols in the plurality of symbols from the symbols that are to be used to retrieve the code skeletons using respective criteria until a number of the symbols that are to be used to retrieve the code skeletons is less than or equal to a threshold number.

(B14) In the example method of any of B1-B13, wherein selecting the symbols from the plurality of symbols comprises: selecting the symbols from the plurality of symbols in response to each of the symbols that is selected being referenced in at least one of active code, a dependency of the active code, or parent code that has a dependency on the active code.

(B15) In the example method of any of B1-B14, wherein causing the AI model to generate at least the portion of the code that performs the specified function comprises: providing the AI prompt together with contextual information that includes the code skeletons and an active document associated with a user from whom the user-generated query is received, as inputs to the AI model; and wherein the code skeletons and the active document comprise context regarding the AI prompt.

(B16) In the example method of any of B1-B15, wherein the response from the AI model further includes a description of a second portion of the code in lieu of the second portion of the code; and wherein the response to the user-generated query includes the description of the second portion of the code in lieu of the second portion of the code.

(B17) In the example method of any of B1-B16, further comprising: pre-indexing the symbols in the codebase to provide an index of the symbols prior to the symbol graph being dynamically constructed; wherein dynamically constructing the symbol graph comprises: dynamically constructing the symbol graph using the index of the symbols.

(B18) In the example method of any of B 1-B 17, wherein pre-indexing the symbols in the codebase comprises: pre-indexing the symbols in the codebase in accordance with a language server index format (LSIF) standard to provide the index of the symbols prior to the symbol graph being dynamically constructed.

(B19) In the example method of any of B1-B18, wherein retrieving the code skeletons comprises: receiving the code skeletons in response to a code skeleton request, which requests the code skeletons, within 100 milliseconds from a time instance at which the code skeleton request is provided.

(B20) In the example method of any of B1-B19, further comprising: causing an embedding model to convert the user-generated query into a first vector that represents first attributes of the user-generated query; causing the embedding model to convert code snippets from the codebase into second vectors that represent second attributes of the code snippets, the code snippets including the plurality of symbols in the codebase; and causing the embedding model to select relevant code snippets from the code snippets by comparing the first vector and the second vectors, the relevant code snippets corresponding to a subset of the second vectors such that similarities between the second vectors in the subset and the first vector are greater than similarities between the other second vectors and the first vector; wherein selecting the symbols from the plurality of symbols comprises: selecting the symbols from the plurality of symbols in response to the symbols being included in the relevant code snippets.

(C1) An example computer program product (Figure 6, 624; Figure 7, 718, 722) comprises a computer-readable storage medium having instructions recorded thereon for enabling a processor-based system (Figure 1, 102A-102M, 106A-106N; Figure 5, 500; Figure 6, 602; Figure 7, 700) to perform operations. The operations comprise receiving (Figure 2, 202) a user-generated query (Figure 5, 542). The user-generated query requests code that performs a specified function. The operations further comprise, in response to receiving the user-generated query, dynamically constructing (Figure 2, 204) a symbol graph (Figure 5, 548), which maps relationships between subsets of a plurality of symbols (Figure 5, 536) in a codebase (Figure 5, 532). The operations further comprise selecting (Figure 2, 206) symbols (Figure 5, 538) from the plurality of symbols in response to the symbols that are selected having relevancies to the user-generated query that satisfy a relevancy criterion by dynamically traversing the symbol graph. The operations further comprise, in response to the symbols being selected from the plurality of symbols, retrieving (Figure 2, 208) code skeletons (Figure 5, 540) associated with the symbols. Each code skeleton defines a structure of a symbol in the codebase and includes placeholder code in lieu of content of the symbol. The operations further comprise causing (Figure 2, 210) an AI model (Figure 5, 522) to generate at least a portion of the code that performs the specified function from at least a subset of the symbols in the codebase by providing an AI prompt (Figure 5, 550) together with the code skeletons as inputs to the AI model. The AI prompt requests that the AI model provide the code that performs the specified function. The code skeletons comprise context regarding the AI prompt. The operations further comprise receiving (Figure 2, 212) a response (Figure 5, 554) to the AI prompt from the AI model. The response to the AI prompt includes at least the portion of the code that is generated by the AI model. The operations further comprise, as a result of receiving the response to the AI prompt from the AI model, triggering (Figure 2, 214) presentation of a response (Figure 5, 574) to the user-generated query. The response to the user-generated query includes at least the portion of the code that is generated by the AI model

### III. Example Computer System

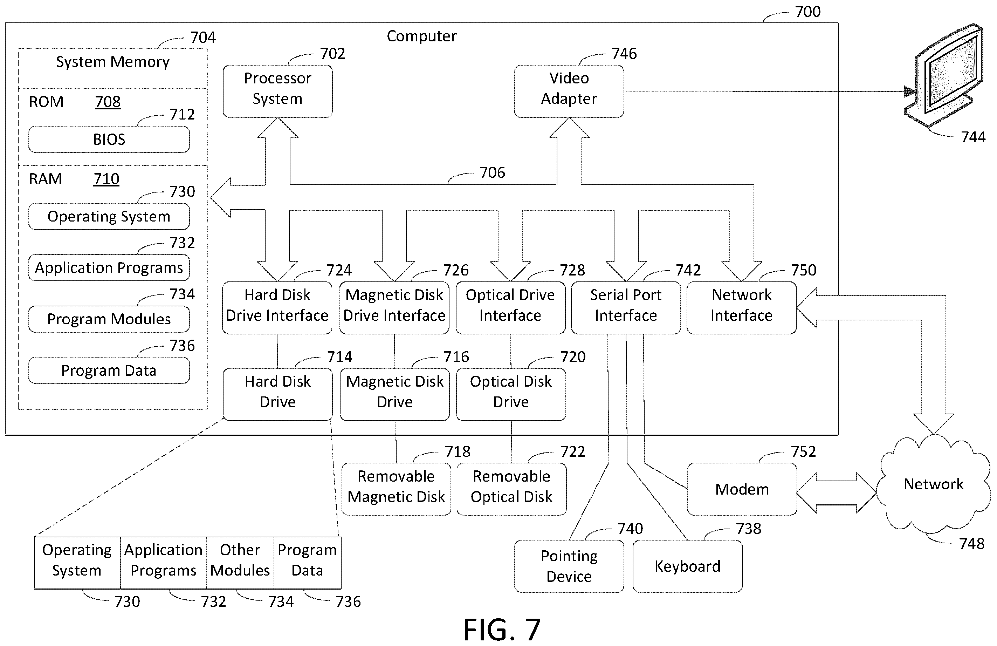

FIG. 7 depicts an example computer 700 in which embodiments may be implemented. Any one or more of the user devices 102A-102M and/or any one or more of the servers 106A-106N shown in FIG. 1 and/or the computing system 500 shown in FIG. 5 may be implemented using computer 700, including one or more features of computer 700 and/or alternative features. Computer 700 may be a general-purpose computing device in the form of a conventional personal computer, a mobile computer, or a workstation, for example, or computer 700 may be a special purpose computing device. The description of computer 700 provided herein is provided for purposes of illustration, and is not intended to be limiting. Embodiments may be implemented in further types of computer systems, as would be known to persons skilled in the relevant art(s).

As shown in FIG. 7, computer 700 includes a processor system 702, a system memory 704, and a bus 706 that couples various system components including system memory 704 to processor system 702. Bus 706 represents one or more of any of several types of bus structures, including a memory bus or memory controller, a peripheral bus, an accelerated graphics port, and a processor or local bus using any of a variety of bus architectures. System memory 704 includes read only memory (ROM) 708 and random access memory (RAM) 710. A basic input/output system 712 (BIOS) is stored in ROM 708.

Computer 700 also has one or more of the following drives: a hard disk drive 714 for reading from and writing to a hard disk, a magnetic disk drive 716 for reading from or writing to a removable magnetic disk 718, and an optical disk drive 720 for reading from or writing to a removable optical disk 722 such as a CD ROM, DVD ROM, or other optical media. Hard disk drive 714, magnetic disk drive 716, and optical disk drive 720 are connected to bus 706 by a hard disk drive interface 724, a magnetic disk drive interface 726, and an optical drive interface 728, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 730, one or more application programs 732, other program modules 734, and program data 736. Application programs 732 or program modules 734 may include, for example, computer program logic for implementing any one or more of (e.g., at least a portion of) the symbol graph-based code generation logic 108, the symbol graph-based code generation logic 508, the store 510, the symbol pre-indexing logic 512, the symbol selection logic 514, the code skeleton retrieval logic 516, the graph construction logic 518, the control logic 520, the AI model 522, the triggering logic 524, the embedding model 526, the conversion logic 528, the snippet selection logic 530, flowchart 200 (including any step of flowchart 200), flowchart 300 (including any step of flowchart 300), and/or flowchart 400 (including any step of flowchart 400), as described herein.

A user may enter commands and information into the computer 700 through input devices such as keyboard 738 and pointing device 740. Other input devices (not shown) may include a microphone, joystick, game pad, satellite dish, scanner, touch screen, camera, accelerometer, gyroscope, or the like. These and other input devices are often connected to the processor system 702 through a serial port interface 742 that is coupled to bus 706, but may be connected by other interfaces, such as a parallel port, game port, or a universal serial bus (USB).

A display device 744 (e.g., a monitor) is also connected to bus 706 via an interface, such as a video adapter 746. In addition to display device 744, computer 700 may include other peripheral output devices (not shown) such as speakers and printers.

Computer 700 is connected to a network 748 (e.g., the Internet) through a network interface or adapter 750, a modem 752, or other means for establishing communications over the network. Modem 752, which may be internal or external, is connected to bus 706 via serial port interface 742.

As used herein, the terms "computer program medium" and "computer-readable storage medium" are used to generally refer to media (e.g., non-transitory media) such as the hard disk associated with hard disk drive 714, removable magnetic disk 718, removable optical disk 722, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and nonoverlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 732 and other program modules 734) may be stored on the hard disk, magnetic disk, optical disk, ROM, or RAM. Such computer programs may also be received via network interface 750 or serial port interface 742. Such computer programs, when executed or loaded by an application, enable computer 700 to implement features of embodiments discussed herein. Accordingly, such computer programs represent controllers of the computer 700.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system (102A-102M, 106A-106N, 500, 602, 700) comprising:
a processor system (610, 702); and
a memory (620, 622, 624, 704, 708, 710) that stores computer-executable instructions that are executable by the processor system (610, 702) to at least:
receive (202) a user-generated query (542), wherein the user-generated query (542) requests code that performs a specified function;
in response to receiving the user-generated query (542), dynamically construct (204) a symbol graph (548), which maps relationships between subsets of a plurality of symbols (536) in a codebase (532);
select (206) symbols (538) from the plurality of symbols (536) in response to the symbols (538) that are selected having relevancies to the user-generated query (542) that satisfy a relevancy criterion by dynamically traversing the symbol graph (548);
in response to the symbols (538) being selected from the plurality of symbols (536), retrieve (208) code skeletons (540) associated with the symbols (538), wherein each code skeleton defines a structure of a symbol in the codebase (532) and includes placeholder code in lieu of content of the symbol;
cause (210) an AI model (522) to generate at least a portion of the code that performs the specified function from at least a subset of the symbols (538) in the codebase (532) by providing an AI prompt (550) together with the code skeletons (540) as inputs to the AI model (522), the AI prompt (550) requesting that the AI model (522) provide the code that performs the specified function, wherein the code skeletons (540) comprise context regarding the AI prompt (550);
receive (212) a response (554) to the AI prompt (550) from the AI model (522), the response (554) to the AI prompt (550) including at least the portion of the code that is generated by the AI model (522); and
as a result of receiving the response (554) to the AI prompt (550) from the AI model (522), trigger (214) presentation of a response (574) to the user-generated query (542), the response (574) to the user-generated query (542) including at least the portion of the code that is generated by the AI model (522).

2. The system according to claim 1, wherein the computer-executable instructions are executable by the processor system to at least:
increase at least one of an accuracy, a precision, or a reliability of the AI model in generating at least the portion of the code by providing the AI prompt together with the code skeletons as the inputs to the AI model.

3. The system according to any one of claims 1 to 2, wherein the computer-executable instructions are executable by the processor system to at least:
increase efficiency of a user from whom the user-generated query is received by presenting at least the portion of the code that is generated by the AI model to the user.

4. The system according to any one of claims 1 to 3, wherein the computer-executable instructions are executable by the processor system to at least:
cause the AI model to determine which of the symbols in the plurality of symbols are relevant to the user-generated query by providing a second AI prompt together with contextual information, which includes the user-generated query and an indication of the plurality of symbols, as inputs to the AI model, the second AI prompt requesting that the AI model determine which of the symbols in the plurality of symbols are relevant to the user-generated query, wherein the user-generated query and the indication of the plurality of symbols comprise context regarding the second AI prompt;
receive a second response to the second AI prompt from the AI model, the second response to the second AI prompt including an indication of relevant symbols, which are determined by the AI model to be relevant to the user-generated query; and
select the symbols from the relevant symbols.

5. The system according to any one of claims 1 to 4, wherein the computer-executable instructions are executable by the processor system to:
select at least identified symbols from the plurality of symbols in response to one or more of:
the identified symbols being referenced in active code;
the second identified symbols being referenced in a dependency of the active code; and
the second identified symbols being referenced in parent code that has a dependency on the active code.

6. The system according to any one of claims 1 to 5, wherein the computer-executable instructions are executable by the processor system to:
iteratively eliminate subsets of the symbols in the plurality of symbols from the symbols that are to be used to retrieve the code skeletons using respective criteria until a number of the symbols that are to be used to retrieve the code skeletons is less than or equal to a threshold number.

7. The system according to any one of claims 1 to 6, wherein the computer-executable instructions are executable by the processor system to at least:
provide the AI prompt together with contextual information that includes the code skeletons and an active document associated with a user from whom the user-generated query is received, as inputs to the AI model; and
wherein the code skeletons and the active document comprise context regarding the AI prompt.

8. The system according to any one of claims 1 to 7, wherein the response from the AI model further includes a description of a second portion of the code in lieu of the second portion of the code; and
wherein the response to the user-generated query includes the description of the second portion of the code in lieu of the second portion of the code.

9. The system according to any one of claims 1 to 8, wherein the computer-executable instructions are executable by the processor system to perform at least one of:
pre-index the symbols in the codebase to provide an index of the symbols prior to the symbol graph being dynamically constructed; and dynamically construct the symbol graph using the index of the symbols; and
pre-index the symbols in the codebase in accordance with a language server index format (LSIF) standard to provide the index of the symbols prior to the symbol graph being dynamically constructed.

10. A method implemented by a computing system (102A-102M, 106A-106N, 500, 602, 700), the method comprising:
receiving (202) a user-generated query (542), wherein the user-generated query (542) requests code that performs a specified function;
in response to receiving the user-generated query (542), dynamically constructing (204) a symbol graph (548), which maps relationships between subsets of a plurality of symbols (536) in a codebase (532);
selecting (206) symbols (538) from the plurality of symbols (536) in response to the symbols (538) that are selected having relevancies to the user-generated query (542) that satisfy a relevancy criterion by dynamically traversing the symbol graph (548);
in response to the symbols (538) being selected from the plurality of symbols (536), retrieving (208) code skeletons (540) associated with the symbols (538), wherein each code skeleton defines a structure of a symbol in the codebase (532) and includes placeholder code in lieu of content of the symbol;
causing (210) an AI model (522) to generate at least a portion of the code that performs the specified function from at least a subset of the symbols (538) in the codebase (532) by providing an AI prompt (550) together with the code skeletons (540) as inputs to the AI model (522), the AI prompt (550) requesting that the AI model (522) provide the code that performs the specified function, wherein the code skeletons (540) comprise context regarding the AI prompt (550);
receiving (212) a response (554) to the AI prompt (550) from the AI model (522), the response (554) to the AI prompt (550) including at least the portion of the code that is generated by the AI model (522); and
as a result of receiving the response (554) to the AI prompt (550) from the AI model (522), triggering (214) presentation of a response (574) to the user-generated query (542), the response (574) to the user-generated query (542) including at least the portion of the code that is generated by the AI model (522).

11. The method according to claim 10, wherein selecting the symbols from the plurality of symbols comprises one or more of:
ranking the symbols to provide respective rankings by taking into consideration whether the symbols are publicly accessible; wherein a symbol being publicly accessible weighs in favor of a relatively higher ranking of the symbol; and wherein the relevancies of the symbols take into consideration the respective rankings; and
ranking the symbols by taking into consideration a type of each of the symbols to provide respective rankings; and wherein the symbols are selected from the plurality of symbols using the respective rankings.

12. The method according to any one of claims 10 to 11, wherein selecting the symbols from the plurality of symbols comprises one or more of:
selecting at least identified symbols from the plurality of symbols in response to the identified symbols being included in at least one of the following:
a namespace that includes active code; or
a folder that includes active code;
selecting at least identified symbols from the plurality of symbols in response to the identified symbols being used a number of times within a specified period of time that is greater than or equal to a threshold number of times; and
selecting the symbols from the plurality of symbols in response to each of the symbols that is selected being referenced in at least one of active code, a dependency of the active code, or parent code that has a dependency on the active code.

13. The method according to any one of claims 10 to 12, wherein retrieving the code skeletons comprises:
receiving the code skeletons in response to a code skeleton request, which requests the code skeletons, within 100 milliseconds from a time instance at which the code skeleton request is provided.

14. The method according to any one of claims 10 to 13, further comprising:
causing an embedding model to convert the user-generated query into a first vector that represents first attributes of the user-generated query;
causing the embedding model to convert code snippets from the codebase into second vectors that represent second attributes of the code snippets, the code snippets including the plurality of symbols in the codebase; and
causing the embedding model to select relevant code snippets from the code snippets by comparing the first vector and the second vectors, the relevant code snippets corresponding to a subset of the second vectors such that similarities between the second vectors in the subset and the first vector are greater than similarities between the other second vectors and the first vector;
wherein selecting the symbols from the plurality of symbols comprises:
selecting the symbols from the plurality of symbols in response to the symbols being included in the relevant code snippets.

15. A computer program product (624, 718, 722) comprising a computer-readable storage medium having instructions recorded thereon for enabling a processor-based system (102A-102M, 106A-106N, 500, 602, 700) to perform operations, the operations comprising:
receiving (202) a user-generated query (542), wherein the user-generated query (542) requests code that performs a specified function;
in response to receiving the user-generated query (542), dynamically constructing (204) a symbol graph (548), which maps relationships between subsets of a plurality of symbols (536) in a codebase (532);
selecting (206) symbols (538) from the plurality of symbols (536) in response to the symbols (538) that are selected having relevancies to the user-generated query (542) that satisfy a relevancy criterion by dynamically traversing the symbol graph (548);
in response to the symbols (538) being selected from the plurality of symbols (536), retrieving (208) code skeletons (540) associated with the symbols (538), wherein each code skeleton defines a structure of a symbol in the codebase (532) and includes placeholder code in lieu of content of the symbol; and
causing (210) an AI model (522) to generate at least a portion of the code that performs the specified function from at least a subset of the symbols (538) in the codebase (532) by providing an AI prompt (550) together with the code skeletons (540) as inputs to the AI model (522), the AI prompt (550) requesting that the AI model (522) provide the code that performs the specified function, wherein the code skeletons (540) comprise context regarding the AI prompt (550).
